(19) Europäisches Patentamt
European Patent Office
Office européen des brevets

(11) **EP 2 660 214 A1**

(12) **EUROPEAN PATENT APPLICATION**
published in accordance with Art. 153(4) EPC

(43) Date of publication:
**06.11.2013 Bulletin 2013/45**

(51) Int Cl.:
**C03C 10/12** (2006.01)

(21) Application number: **11853522.8**

(22) Date of filing: **26.12.2011**

(86) International application number:
**PCT/JP2011/079993**

(87) International publication number:
**WO 2012/090894 (05.07.2012 Gazette 2012/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.12.2010 JP 2010289448
29.11.2011 JP 2011259886**

(71) Applicant: **Nippon Electric Glass Co., Ltd.
Otsu-shi
Shiga 520-8639 (JP)**

(72) Inventors:
 • **FUJISAWA Tai
  Otsu-shi
  Shiga 520-8639 (JP)**
 • **NAKANE Shingo
  Otsu-shi
  Shiga 520-8639 (JP)**

(74) Representative: **Tetzner, Michael et al
Van-Gogh-Strasse 3
81479 München (DE)**

(54) **CRYSTALLIZED GLASS**

(57) Provided is crystallized glass, comprising, as a glass composition in terms of mass%, 55 to 73% of $SiO_2$, 17 to 25% of $Al_2O_3$, 2 to 5% of $Li_2O$, 2.5 to 5.5% of $TiO_2$, 0 to 2.3% of $ZrO_2$, 0.2 to 0.9% of $SnO_2$, and 0.005 to 0.09% of $V_2O_5$, wherein the crystallized glass is substantially free of $As_2O_3$ and $Sb_2O_3$.

EP 2 660 214 A1

## Description

Technical Field

The present invention relates to crystallized glass used for a top plate of a cooking device having an induction heating unit (IH), a halogen heater, or the like as a heat source.

Background Art

A top plate used in a cooking device having IH, a halogen heater, or the like as a heat source is required to be hard to be broken (to have high mechanical strength and high thermal shock resistance), to have a good appearance, to be hard to be corroded (to have high chemical resistance), to have a high transmittance of infrared light as aheat ray, and the like. As a material satisfying these characteristics, there is given a low-expansion transparent crystallized glass containing a $\beta$-quartz solid solution ($Li_2O-Al_2O_3-nSiO_2$ ($n\geq2$)) as a main crystal, which is used for a top plate of a cooking device.

The low-expansion transparent crystallized glass is manufactured through a blending step of mixing various raw glass materials in a predetermined ratio, a melting step of melting the raw glass materials at high temperature of 1600 to 1900°C to form a homogenized fluid, a forming step of forming the fluid into various shapes by various methods, an annealing step of removing strain, and a crystallizing step of precipitating a fine crystal. The crystallizing step includes a nucleus forming step of precipitating a fine crystal to be a nucleus of a crystal and a crystal growing step of growing the crystal.

The low-expansion transparent crystallized glass thus manufactured is generally transparent to visible light. Therefore, when the low-expansion transparent crystallized glass is used as a top plate as it is, an internal structure of a cooking device placedbelow the top plate is seen directly, which degrades appearance. Therefore, the low-expansion transparent crystallized glass is used with visible light shielded sufficiently by coloring the crystallized glass itself with a coloring agent such as $V_2O_5$ (see, for example, Patent Literature 1), or by forming a light-shielding film on a surface of the crystallized glass (see, for example, Patent Literature 2).

It is considered that the coloring of glass with a coloring agent such as $V_2O_5$ is generated or intensified by an interaction between the coloring agent and $As_2O_3$ and $Sb_2O_3$ as a fining agent. However, an environmental burden caused by $As_2O_3$ and $Sb_2O_3$ is large, and hence the use thereof has been limited in recent years. However, if $As_2O_3$ and $Sb_2O_3$ are simply excluded from a conventional glass composition, an efficiency of coloring by a coloring agent tends to decrease. Although the effect of shielding visible light can be enhanced by increasing the amount of a coloring agent, there is a problem, according to this method, in that the infrared light transmittance reduces. As a matter of course, the reduction of the infrared light transmittance deteriorates cooking performance. In addition, the thermal energy of a heat source needs to be increased in order to obtain a desired heating performance. Accordingly, the reduction of the infrared light transmittance is also not preferred from the viewpoint of energy savings.

On the other hand, it is proposed that, for example, $SnO_2$ or the like is added as a component for enhancing the coloring efficiency of a coloring agent, instead of $As_2O_3$ and $Sb_2O_3$ (see, for example, Patent Literature 3). According to this method, a top plate having a small environmental burden and being excellent in infrared light transparency and visible light shielding property can be obtained.

Citation List

Patent Literature 1: JP 03-9056 B
Patent Literature 2: JP 2003-68435 A
Patent Literature 3: JP 2004-523446 A

Summary of Invention

Technical Problem

The crystallized glass disclosed in Patent Literature 3 involves a problem in that a variation in visible light transmitting property becomes large depending on a change in thermal history of glass melting in manufacturing. In addition, the glass involves a problem in that color tone thereof becomes changed with a long-term use.

Therefore, a technical problem to be solved by the present invention is to provide a crystallized glass that has a small variation in visible light transmitting property even when the thermal history of glass melting in manufacturing fluctuates and whose color tone hardly changes with a long-term use.

Solution to Problem

The present invention provides a crystallized glass, comprising, as a glass composition in terms of mass%, 55 to 73% of $SiO_2$, 17 to 25% of $Al_2O_3$, 2 to 5% of $Li_2O$, 2.5 to 5.5% of $TiO_2$, 0 to 2.3% of $ZrO_2$, 0.2 to 0.9% of $SnO_2$, and 0.005 to 0.09% of $V_2O_5$, wherein the crystallized glass is substantially free of $As_2O_3$ and $Sb_2O_3$.

The crystallized glass of the present invention satisfies the composition range as above and therefore can exert such effects in that the glass has a small variation in visible light transmitting property even when the thermal history of glass melting in manufacturing fluctuates, and the color tone is hard to be changed with a long-term use. Mechanisms for the foregoing are described below.

V ions are present mainly in a trivalent to pentavalent state in the glass, and it is presumed that the coloring of the crystallized glass is generated by tetravalent V ions present in the matrix glass phase. Further, it is known that, when tetravalent V ions are bonded to $TiO_2$ present in the matrix glass phase, the degree of coloring is further enhanced (visible light transmittance decreases). Thus, the coloring of the crystallized glass is largely influenced by the amounts of tetravalent V ions and $TiO_2$ in the matrix glass phase.

On the other hand, it is known that the valence of V ion changes due to the presence of Sn (in particular, the oxidation-reduction function of Sn ions). That is, it is considered that a mixed ratio between $V_2O_5$ and $SnO_2$ influences the degree of coloring. In the present invention, the content ranges of $V_2O_5$ and $SnO_2$ are set to the above ranges so that the number of Sn ions is excessive with respect to that of V ions. As a result, even when the oxidation state of a part of Sn ions changes due to the thermal history in melting, Sn ions whose oxidation state do not change are present in an excess amount with respect to V ions and hence the amount of tetravalent V ions hardly changes. Accordingly, even when a melting condition changes, the visible light transmitting property becomes hard to be changed.

In addition, when the crystallized glass of the present invention is used in an application involving heating such as a top plate of a cooking device over a long term, the crystallization further proceeds. When the crystallization proceeds, the matrix glass composition changes so that the concentration of tetravalent V ions and $TiO_2$ that do not contribute to the crystal composition increase relatively in the matrix glass phase. As a result, a bonding state between tetravalent V ions and $TiO_2$ changes, and the transmittance in the visible light region changes. The crystallized glass of the present invention has also the following feature. $TiO_2$ is present in an excess amount with respect to tetravalent V ions, and hence the bonding state between tetravalent V ions and $TiO_2$ is hard to be changed even when the matrix glass composition changes with a long-term use, and the visible light transmittance is hard to be changed.

It should be noted that the environmental burden of $As_2O_3$ and $Sb_2O_3$ is large, and hence the use thereof has been limited in recent years. The crystallized glass of the present invention is substantially free of these components, and hence can reduce the environmental burden at the time of the disposal of the crystallized glass. The expression "substantially free of $As_2O_3$ and $Sb_2O_3$" in the present invention means that these components are not added intentionally, in other words, may be contained as inevitable impurities, and specifically, means that the content of each of the components is less than 0.1% (in particular, less than 0.01%).

In the crystallized glass of the present invention, the total content of $TiO_2+SnO_2$ is preferably 2.7 to 6%.

The crystallized glass of the present invention preferably further comprises 0 to 2% of MgO and 0 to 2% of ZnO.

In the crystallized glass of the present invention, the total content of $Li_2O+MgO+ZnO$ is preferably 3 to 6%.

The crystallized glass of the present invention is preferably used for a top plate of a cooking device.

Also, the present invention presents a crystallizable glass, comprising, as a glass composition in terms of mass%, 55 to 73% of $SiO_2$, 17 to 25% of $Al_2O_3$, 2 to 5% of $Li_2O$, 2.5 to 5.5% of $TiO_2$, 0 to 2.3% of $ZrO_2$, 0.2 to 0.9% of $SnO_2$, and 0.005 to 0.09% of $V_2O_5$, wherein the crystallizable glass is substantially free of $As_2O_3$ and $Sb_2O_3$.

Description of Embodiments

Crystallized glass of the present invention comprises, as a glass composition in terms of mass%, 55 to 73% of $SiO_2$, 17 to 25% of $Al_2O_3$, 2 to 5% of $Li_2O$, 2.5 to 5.5% of $TiO_2$, 0 to 2.3% of $ZrO_2$, 0.2 to 0.9% of $SnO_2$, and 0.005 to 0.09% of $V_2O_5$, wherein the crystallized glass is substantially free of $As_2O_3$ and $Sb_2O_3$.

The reasons why the composition is restricted as above are described below. Note that in the following descriptions of the contents of the components, "%" refers to "mass%" unless otherwise stated.

$SiO_2$ is a component that forms a network of glass and constitutes a β-quartz solid solution. The content of $SiO_2$ is preferably 55 to 73%, 60 to 71%, particularly preferably 63 to 70%. When the content of $SiO_2$ is too small, the thermal expansion coefficient tends to increase, which makes it difficult to obtain crystallized glass excellent in thermal shock resistance. Further, the chemical resistance tends to decrease. On the other hand, when the content of $SiO_2$ is too large, the meltability of glass is decreased and the viscosity of molten glass increases, and thus the forming of the glass tends to be difficult.

$Al_2O_3$ is a component that forms a network of glass and constitutes a β-quartz solid solution. The content of $Al_2O_3$ is preferably 17 to 25%, 17.5 to 24%, particularly preferably 18 to 22%. When the content of $Al_2O_3$ is too small, the thermal expansion coefficient tends to increase, which makes it difficult to obtain crystallized glass excellent in thermal shock resistance. Further, the chemical resistance tends to decrease. On the other hand, when the content of $Al_2O_3$ is too large, the meltability of glass is decreased and the viscosity of glass melt increases, and thus the forming of the glass tends to be difficult. Further, the glass tends to be devitrified due to the precipitation of a mullite crystal, and cracks are liable to occur in the glass from the devitrified portion. Thus, the forming of the glass tends to be difficult.

$Li_2O$ is a component that constitutes a β-quartz solid solution and has a large effect on crystallinity and also decreases the viscosity of glass to enhance the meltability and formability. The content of $Li_2O$ is preferably 2 to 5%, 2.3 to 4.7%, particularly preferably 2.5 to 4.5%. When the content of $Li_2O$ is too small, the glass tends to be devitrified due to the precipitation of a mullite crystal, and cracks are liable to occur in the glass from the devitrified portion. Thus, the forming of the glass tends to be difficult. Further, when the glass is crystallized, a β-quartz solid solution crystal becomes hard to be precipitated, and crystallized glass excellent in thermal shock resistance is difficult to be obtained. Further, the meltability of glass tends to decrease and the viscosity of molten glass tends to increase. Thus, the forming of the glass tends to be difficult. On the other hand, when the content of $Li_2O$ is too large, the crystallinity becomes too strong, so that a coarse crystal is liable to be precipitated in the crystallization step. As a result, a transparent crystallized glass is difficult to be obtained due to cloudiness, or the resultant glass is liable to be broken, and thus the forming thereof tends to be difficult.

$TiO_2$ is a component that forms crystal nuclei for precipitating a crystal in the crystallization step, and has a function of enhancing coloration of tetravalent V ions. The content of $TiO_2$ is preferably 2.5 to 5.5%, 2.6 to 5.2%, 2.8 to 5.0%, particularly preferably 3.4 to 4.8%. When the content of $TiO_2$ is too small, the amount of $TiO_2$ that remains in a matrix glass phase becomes small. Therefore, $TiO_2$ is hard to be bonded to tetravalent V ions, so that the efficiency of coloration tends to decrease. On the other hand, when the content of $TiO_2$ is too large, the glass tends to be devitrified in the process from the melting step to the forming step and becomes liable to be broken, and thus the forming thereof tends to be difficult.

$ZrO_2$ is a component that forms crystal nuclei for precipitating a crystal in the crystallization step in the similar manner to that of $TiO_2$. The content of $ZrO_2$ is preferably 0 to 2.3%, 0 to 2.1%, particularly preferably 0.1 to 1.8%. When the content of $ZrO_2$ is too large, the glass tends to be devitrified in the process from the melting step to the forming step and becomes liable to be broken, and thus the forming thereof tends to be difficult.

The total content of $TiO_2$ and $ZrO_2$ is preferably 3.8 to 6.5%, particularly preferably 4.2 to 6%. When the total content of these components is too large, the glass tends to be devitrified in the process from the melting step to the forming step and becomes liable to be broken, and thus the forming thereof tends to be difficult. On the other hand, when the total content of these components is too small, crystal nuclei are not formed sufficiently. Accordingly, the crystal is liable to become coarse. As a result, a transparent crystallized glass is difficult to be obtained due to cloudiness.

$SnO_2$ is a component that increases tetravalent V ions as a coloring component to enhance coloration, and also has a fining function. The content of $SnO_2$ is preferably 0.2 to 0.9%, 0.2 to 0.85%, 0.25 to 0.8%, particularly preferably 0.28 to 0.7%. When the content of $SnO_2$ is too small, tetravalent V ions are not generated efficiently, and hence a coloring effect is hard to be enhanced. In addition, the visible light transmitting property becomes liable to fluctuate upon changing of melting condition. When the content of $SnO_2$ is too large, the glass tends to be devitrified in the process from the melting step to the forming step and becomes liable to be broken, and thus the forming thereof tends to be difficult.

The total content of $TiO_2$ and $SnO_2$ is preferably 2.7 to 6%, particularly preferably 3 to 5.5%. When the total content of these components is too small, the coloring effect of V ions is hard to be enhanced. On the other hand, when the total content of these components is too large, the glass tends to be devitrified in the process from the melting step to the forming step and becomes liable to be broken, and thus the forming thereof tends to be difficult.

$V_2O_5$ is a coloring component. The content of $V_2O_5$ is preferably 0.005 to 0.09%, 0.015 to 0.08%, 0.025 to 0.07%, particularly preferably 0.028 to 0.06%. When the content of $V_2O_5$ is too small, coloring becomes insufficient, which makes it hard to shield visible light sufficiently. On the other hand, when the content of $V_2O_5$ is too large, the transmittance of infrared light tends to decrease. Further, a β-quartz solid solution becomes liable to be subjected to crystal transition to a β-spodumene solid solution, which may cause cloudiness.

It should be noted that when the contents of $SnO_2$ and $V_2O_5$ satisfy the above ranges, and the value of $SnO_2 + 10V_2O_5$ is 0.55% or more, particularly 0.6% or more, the crystallized glass tends to be sufficiently colored and excellent in visible light shielding property.

A ratio ($SnO_2/V_2O_5$: mass ratio) between the contents of $SnO_2$ and $V_2O_5$ is preferably 5.8 or more, particularly preferably 6.5 or more. When the ratio $SnO_2/V_2O_5$ is too small, the visible light transmitting property becomes liable to fluctuate upon changing of melting condition.

It should be noted that the crystallized glass of the present invention is substantially free of $As_2O_3$ and $Sb_2O_3$ because these components are substances that cause an enviromental burden.

In addition to the above-mentioned components, the following components can be added to the crystallized glass of the present invention within a range not impairing the required properties.

MgO is a component that dissolves in a $\beta$-quartz solid solution crystal in place of $Li_2O$. MgO has a larger increasing effect on the thermal expansion coefficient than that of $Li_2O$, and hence the thermal expansion coefficient of the crystallized glass can be adjusted by actively adding MgO. In addition, when MgO dissolves in a $\beta$-quartz solid solution crystal, transition from the $\beta$-quartz solid solution crystal to a $\beta$-spodumene crystal can be suppressed. As a result, the breakage of the crystallized glass caused by a local increase in thermal expansion coefficient due to the precipitation of the $\beta$-spodumene crystal can be suppressed. The content of MgO is preferably 0 to 2%, 0 to 1.7%, particularly preferably 0.1 to 1.5%. When the content of MgO is too large, the crystallinity of the glass tends to be so strong that the glass is devitrified. As a result, the glass becomes liable to be broken, which makes the forming of the glass difficult.

ZnO is a component that dissolves in the $\beta$-quartz solid solution crystal in the similar manner to that of MgO. The thermal expansion coefficient of the crystallized glass can be adjusted by adding ZnO in the similar manner to that of MgO. In addition, the transition from the $\beta$-quartz solid solution crystal to the $\beta$-spodumene crystal can be suppressed. Accordingly, the breakage of the crystallized glass caused by a local increase in thermal expansion coefficient due to the precipitation of the $\beta$-spodumene crystal can be suppressed. The content of ZnO is preferably 0 to 2%, 0 to 1.7%, particularly preferably 0.1 to 1.5%. When the content of ZnO is too large, the crystallinity tends to become too strong. Therefore, when forming is performed with gradual cooling, the glass is devitrified to be liable to be broken, which is unsuitable for forming, for example, by a float method.

It should be noted that the total content of $Li_2O$, MgO, and ZnO is preferably 3 to 6%, particularly preferably 3.5 to 5.5%. When the total content of these components is too small, the glass tends to be devitrified due to the precipitation of a mullite crystal, and cracks are liable to occur in the glass from the devitrified portion. Accordingly, the forming of the glass tends tobedifficult. In addition, the $\beta$-quartz solid solution crystal is hard to be precipitated upon crystallization of the glass, which makes it difficult to obtain crystallized glass excellent in thermal shock resistance. Further, the meltability of glass tends to be decreased and the viscosity of molten glass tends to increase, and hence the forming of the glass tends to be difficult. On the other hand, when the total content of these components is too large, the crystallinity of the glass becomes so strong that a coarse crystal is liable to be precipitated in the crystallization step. As a result, a transparent crystallized glass cannot be obtained due to cloudiness, or the glass becomes liable to be broken and hence the forming thereof tends to be difficult.

$P_2O_5$ is a component that accelerates the phase separation of glass. As crystal nuclei are likely to be generated in a place where the glass is subjected to phase separation, $P_2O_5$ has a function of assisting the formation of crystal nuclei. The content of $P_2O_5$ is preferably 0 to 2%, particularly preferably 0.1 to 1%. When the content of $P_2O_5$ is too large, the glass is subjected to phase separation in the melting step. Therefore, glass having a desired composition is hard to be obtained, and the resultant glass tends to be opaque.

$Na_2O$ is a component that decreases the viscosity of glass to enhance the meltability and formability of the glass. The content of $Na_2O$ is preferably 0.5% or less, 0.3% or less, particularly preferably 0.2% or less. When the content of $Na_2O$ is too large, the crystal transition from the $\beta$-quartz solid solution to the $\beta$-spodumene solid solution is accelerated, and hence cloudiness is liable to occur due to coarse crystals. Further, the thermal expansion coefficient tends to increase, which makes it difficult to obtain crystallized glass excellent in thermal shock resistance.

In order to decrease the viscosity of glass to enhance the meltability and formability thereof, $K_2O$, CaO, SrO, and BaO can be added in the total content of up to 5%. It should be noted that CaO, SrO, and BaO are each a component that cause devitrification when melting glass. Therefore, it is preferable that the total content of these components be 2% or less. Further, CaO has a function of accelerating the crystal transition from the $\beta$-quartz solid solution to the $\beta$-spodumene solid solution, and hence the crystallized glass should be refrained from the use of CaO as much as possible.

As a fining agent, $So_2$ and Cl may be added alone or in combination, if required. The total content of these components is preferably 0.5% or less. In particular, Cl is excellent in fining property and has an enhancing effect on coloration of V ions.

Colored transition metal elements except Ti, Zr, and V (for example, Cr, Mn, Fe, Co, Ni, Cu, Mo, and Cd) may absorb infrared light or may cause the loss of a reduction ability of Sn ions (the colored transition metal elements react with Sn ions to inhibit a reaction between V ions and Sn ions). In addition, the colored transition metal elements are bonded to Sn ions to exert enhancing effects on coloration of each colored transition metal ion. Therefore, it is preferred to avoid containing these elements as much as possible. Specifically, the content of each of these components is limited to preferably 1000 ppm or less, 500 ppm or less, particularly preferably 300 ppm or less.

Crystallizable glass as a material for the crystallized glass of the present invention comprises, as a glass composition in terms of mass%, 55 to 73% of $SiO_2$, 17 to 25% of $Al_2O_3$, 2 to 5% of $Li_2O$, 2.5 to 5.5% of $TiO_2$, 0 to 2.3% of $ZrO_2$, 0.2 to 0.9% of $SnO_2$, and 0.005 to 0.09% of $V_2O_5$, wherein the crystallizable glass is substantially free of $As_2O_3$ and $Sb_2O_3$.

Those described in the foregoing for the crystallized glass are applicable to, for example, the reasons why the composition is thus restricted and preferred composition ranges, and any other components that can be added.

The crystallized glass of the present invention can be manufactured as follows.

First, various raw glass materials are blended so as to obtain the above-mentioned glass composition. Next, the blended raw glass materials are melted at a temperature of, for example, 1600 to 1900°C and then formed to obtain a crystallizable glass. As a forming method, various forming methods such as a blow method, a press method, a roll-out method, and a float method are applicable. After the crystallizable glass is annealed, crystal nuclei are formed at, for example, 700 to 800°C. Then, β-quartz solid solution crystals are grown at 800 to 900°C to obtain the crystallized glass.

The crystallized glass thus manufactured may be subjected to post-processing such as cutting, polishing, bending, and reheat pressing, and a surface thereof maybe subjectedtopainting, film coating, or the like.

The crystallized glass of the present invention has a transmittance, at a thickness of 3 mm, at a wavelength of 700 nm, of preferably 35% or less, particularly preferably 30% or less. This can shield the internal structure of a cooking device sufficiently. On the other hand, in a case where a luminescent display device such as an LED is placed below a crystallized glass plate to indicate a temperature, a thermal power, or the like through the crystallized glass plate, the crystallized glass has a transmittance, at a thickness of 3 mm, at a wavelength of 700 nm, of preferably 5% or more, 10% or more, particularly preferably 15% or more. Thus, when the crystallized glass is used for a top plate of a cooking device having IH or the like, indications by the luminescent display device are sufficiently visible through the crystallized glass plate.

Further,the crystallized glassofthe presentinvention has a transmittance, at a thickness of 3 mm, at a wavelength of 1150 nm, of preferably 85% or more, more preferably 86% or more, in order to transmit a heat ray (infrared light) efficiently.

It is preferred that the visible light transmittance be hard to be changed, even when the crystallized glass of the present invention is used for an application involving heating such as a top plate of a cooking device for a long term. Specifically, for the crystallized glass of the present invention, a change ratio of an absorbance at a wavelength of 700 nm, after heat treat treatment at 900°C for 50 hours as an acceleration test, is preferably 10% or less, 8% or less, particularly preferably 5% or less. The absorbance change ratio is calculated as follows.

$$Absorbance = -\log_{10}(transmittance\ (\%)/100)$$

$$Absorbance\ change\ ratio = (absorbance\ after\ heat\ treatment - absorbance\ before\ heat\ treatment)/absorbance\ before\ heat\ treatment \times 100\ (\%)$$

The thermal expansion coefficient of the crystallized glass of the present invention in a temperature range of 30 to 750°C is preferably -10 to $30 \times 10^{-7}$/°C, particularly preferably -10 to $20 \times 10^{-7}$/°C. When the thermal expansion coefficient is within this range, the crystallized glass excellent in thermal shock resistance is obtained. In the present invention, the thermal expansion coefficient refers to a value measured by a dilatometer.

Examples

Next, the present invention is described in detail by way of examples. However, the present invention is not limited to these examples.

Tables 1 to 4 show examples (Nos. 1 to 11, 16, and 17) of the present invention and comparative examples (Nos. 12 to 15).

[Table 1]

| [Mass%] | No. 1 | No. 2 | No. 3 | No. 4 | No. 5 |
|---|---|---|---|---|---|
| $SiO_2$ | 67.565 | 68.37 | 67.775 | 68.077 | 68.18 |
| $Al_2O_3$ | 21.0 | 20.2 | 19.8 | 20.5 | 20.6 |
| $Li_2O$ | 4.3 | 3.8 | 3.9 | 4.1 | 3.7 |
| MgO | | 0.5 | 0.8 | 0.2 | 1.2 |
| ZnO | 1.1 | 0.8 | 0.2 | 0.4 | |

(continued)

| [Mass%] | | | | No. 1 | No. 2 | No. 3 | No. 4 | No. 5 |
|---|---|---|---|---|---|---|---|---|
| $TiO_2$ | | | | 4.2 | 4.8 | 3.8 | 4.0 | 4.5 |
| $ZrO_2$ | | | | 0.8 | | 1.5 | 0.5 | 0.2 |
| $P_2O_5$ | | | | | 0.3 | 0.2 | 1.0 | 0.5 |
| $Na_2O$ | | | | 0.2 | 0.5 | 0.3 | | 0.1 |
| $K_2O$ | | | | 0.5 | 0.3 | 0.2 | 0.5 | 0.3 |
| CaO | | | | | | | 0.1 | |
| BaO | | | | | | 1.0 | | |
| $SnO_2$ | | | | 0.3 | 0.4 | 0.5 | 0.6 | 0.7 |
| $V_2O_5$ | | | | 0.035 | 0.030 | 0.025 | 0.023 | 0.020 |
| Li+Mg+Zn | | | | 5.4 | 5.1 | 4.9 | 4.7 | 4.9 |
| Ti+Sn | | | | 4.5 | 5.2 | 4.3 | 4.6 | 5.2 |
| Transmittance (%) | Melting condition 1 | 700 nm | | 21.9 | 20.1 | 18.0 | 18.5 | 18.2 |
| | | 1150 nm | | 87.8 | 86.3 | 85.7 | 85.4 | 86.2 |
| | Melting condition 2 | 700 nm | | 20.3 | 18.5 | 17.3 | 17.4 | 15.9 |
| | | 1150 nm | | 87.5 | 85.5 | 85.4 | 84.6 | 85.5 |
| | Melting condition 3 | 700 nm | | 21.7 | 19.6 | 18.4 | 17.6 | 17.3 |
| | | 1150 nm | | 87.8 | 86.6 | 86.1 | 84.2 | 85.4 |
| Absorbance variation (%) ($\lambda$=700 nm) | | | | 5 | 5 | 4 | 4 | 8 |
| 700 nm | | Before heat treatment | | 21.9 | 20.1 | 18.0 | 18.5 | 18.2 |
| | | After heat treatment | | 19.6 | 17.5 | 15.7 | 16.2 | 15.5 |
| 1150 nm | | Before heat treatment | | 87.8 | 86.3 | 85.7 | 85.4 | 86.2 |
| | | After heat treatment | | 86.0 | 84.4 | 84.5 | 83.8 | 84.3 |
| Absorbance change ratio (%) ($\lambda$=700 nm) | | | | 7 | 9 | 8 | 8 | 9 |
| Fining performance | | | | B | B | A | A | A |
| Devitrification resistance | | | | ○ | ○ | ○ | ○ | ○ |

[Table 2]

| [Mass%] | No. 6 | No. 7 | No. 8 | No. 9 | No. 10 |
|---|---|---|---|---|---|
| $SiO_2$ | 67.57 | 68.765 | 68.06 | 66.36 | 65.78 |
| $Al_2O_3$ | 20.0 | 20.3 | 20.5 | 22.0 | 21.2 |
| $Li_2O$ | 4.1 | 4.3 | 4.2 | 3.7 | 3.2 |
| MgO | 0.5 | 0.7 | 0.5 | 0.4 | 1.0 |
| ZnO | 0.3 | 0.2 | 0.3 | 0.3 | 1.2 |
| $TiO_2$ | 5.0 | 4.2 | 3.0 | 2.8 | 3.9 |
| $ZrO_2$ | 0.3 | 0.6 | 1.5 | 2.0 | 1.2 |
| $P_2O_5$ | 0.5 | | 1.2 | 1.0 | - |
| $Na_2O$ | 0.8 | 0.2 | 0.3 | 0.7 | 0.3 |
| $K_2O$ | 0.5 | 0.3 | | 0.4 | 0.2 |
| CaO | | 0.1 | | | |
| BaO | | | | | 1.3 |
| $SnO_2$ | 0.50 | 0.30 | 0.40 | 0.30 | 0.70 |

(continued)

| [Mass%] | | | No. 6 | No. 7 | No. 8 | No. 9 | No. 10 |
|---|---|---|---|---|---|---|---|
| $V_2O_5$ | | | 0.03 | 0.035 | 0.04 | 0.04 | 0.02 |
| Li+Mg+Zn | | | 4.9 | 5.2 | 5.0 | 4.4 | 5.4 |
| Ti+Sn | | | 5.5 | 4.5 | 3.4 | 3.1 | 4.6 |
| Transmittance (%) | Melting condition 1 | 700 nm | 15.0 | 21.8 | 17.9 | 16.1 | 16.2 |
| | | 1150 nm | 87.3 | 87.6 | 84.4 | 85.9 | 85.7 |
| | Melting condition 2 | 700 nm | 14.6 | 20.5 | 17.7 | 15.9 | 15.5 |
| | | 1150 nm | 87.2 | 87.0 | 84.1 | 85.7 | 85.0 |
| | Melting condition 3 | 700 nm | 15.3 | 22.0 | 18.2 | 16.5 | 16.5 |
| | | 1150 nm | 87.7 | 87.9 | 84.6 | 86.0 | 85.7 |
| Absorbance variation (%) ($\lambda$=700 nm) | | | 3 | 4 | 2 | 2 | 3 |
| 700 nm | | Before heat treatment | 15.0 | 21.8 | 17.9 | 16.1 | 16.2 |
| | | After heat treatment | 13.5 | 18.6 | 16.0 | 14.3 | 14.2 |
| 1150 nm | | Before heat treatment | 87.3 | 87.6 | 84.4 | 85.9 | 85.7 |
| | | After heat treatment | 86.7 | 86.2 | 83.6 | 84.7 | 83.8 |
| Absorbance change ratio (%) ($\lambda$=700 nm) | | | 6 | 10 | 7 | 7 | 7 |
| Fining performance | | | A | B | B | B | A |
| Devitrification resistance | | | ○ | ○ | ○ | ○ | ○ |

[Table 3]

| [Mass%] | No. 11 | No. 12 | No. 13 | No. 14 | No. 15 |
|---|---|---|---|---|---|
| $SiO_2$ | 68.765 | 67.08 | 68.92 | 67.19 | 68.03 |
| $Al_2O_3$ | 20.3 | 19.7 | 20.3 | 20.8 | 20.5 |
| $Li_2O$ | 4.3 | 4.2 | 4.3 | 3.5 | 4.0 |
| MgO | 0.7 | 0.5 | 0.7 | 0.3 | 1.2 |
| ZnO | 0.2 | 0.6 | 0.2 | 1.0 | 0.3 |
| $TiO_2$ | 4.2 | 3.8 | 4.2 | 4.4 | 4.9 |
| $ZrO_2$ | 0.6 | 1.1 | 0.6 | 0.2 | |
| $P_2O_5$ | | 1.2 | | | |
| $Na_2O$ | 0.2 | 0.4 | 0.2 | 0.4 | 0.5 |
| $K_2O$ | 0.3 | 0.2 | 0.3 | 0.3 | 0.2 |
| CaO | 0.1 | | 0.1 | | |
| BaO | | | | 1.5 | |
| $SnO_2$ | 0.30 | 1.2 | 0.1 | 0.4 | 0.25 |
| $V_2O_5$ | 0.035 | 0.02 | 0.08 | 0.001 | 0.12 |
| $Fe_2O_3$ | 0.06 | | | | |
| Li+Mg+Zn | 5.2 | 5.3 | 5.2 | 4.8 | 5.5 |
| Ti+Sn | 4.5 | 5.0 | 4.3 | 4.8 | 5.15 |

(continued)

| [Mass%] | | | | No. 11 | No. 12 | No. 13 | No. 14 | No. 15 |
|---|---|---|---|---|---|---|---|---|
| Transmittance (%) | Melting condition 1 | 700 nm | | 17.5 | - | 25.6 | - | 22.8 |
| | | 1150 nm | | 82.7 | - | 83.5 | - | 82.2 |
| | Melting condition 2 | 700 nm | | 16.4 | 18.4 | 22.4 | 83.5 | 21.6 |
| | | 1150 nm | | 82.3 | 83.8 | 83.1 | 88.7 | 80.3 |
| | Melting condition 3 | 700 nm | | 17.1 | - | 27.8 | - | 25.4 |
| | | 1150 nm | | 82.5 | - | 84.0 | - | 81.8 |
| Absorbance variation (%) ($\lambda$=700 nm) | | | | 4 | - | 14 | - | 11 |
| 700 nm | | Before heat treatment | | 17.5 | - | 25.6 | - | 22.8 |
| | | After heat treatment | | 15.7 | - | 21.5 | - | 17.6 |
| 1150 nm | | Before heat treatment | | 82.7 | | 83.5 | - | 82.2 |
| | | After heat treatment | | 81.9 | - | 82.1 | - | 79.4 |
| Absorbance change ratio (%) ($\lambda$=700 nm) | | | | 6 | - | 13 | - | 17 |
| Fining performance | | | | B | A | D | B | A |
| Devitrification resistance | | | | ○ | × | ○ | ○ | ○ |

[Table 4]

| [Mass%] | | | | No. 16 | No. 17 |
|---|---|---|---|---|---|
| $SiO_2$ | | | | 68.765 | 66.75 |
| $Al_2O_3$ | | | | 20.3 | 21.0 |
| $Li_2O$ | | | | 4.3 | 4.0 |
| MgO | | | | 0.7 | 0.5 |
| ZnO | | | | 0.2 | 0.8 |
| $TiO_2$ | | | | 4.2 | 3.8 |
| $ZrO_2$ | | | | 0.6 | 1.5 |
| $P_2O_5$ | | | | - | 0.5 |
| $Na_2O$ | | | | 0.2 | 0.3 |
| $K_2O$ | | | | 0.3 | 0.5 |
| CaO | | | | 0.1 | - |
| BaO | | | | | |
| $SnO_2$ | | | | 0.30 | 0.28 |
| $V_2O_5$ | | | | 0.035 | 0.07 |
| Cl | | | | 0.06 | - |
| Li+Mg+Zn | | | | 5.2 | 5.3 |
| Ti+Sn | | | | 4.5 | 4.08 |
| Transmittance (%) | Melting condition 1 | 700 nm | | 16.7 | 21.8 |
| | | 1150 nm | | 82.2 | 81.4 |
| | Melting condition 2 | 700 nm | | 15.9 | 19.5 |
| | | 1150 nm | | 81.8 | 80.6 |
| | Melting condition 3 | 700 nm | | 16.5 | 21.1 |
| | | 1150 nm | | 82.0 | 81.4 |

(continued)

| [Mass%] | | No. 16 | No. 17 |
|---|---|---|---|
| Absorbance variation (%) ($\lambda$=700 nm) | | 3 | 7 |
| 700 nm | Before heat treatment<br>After heat treatment | 16.7<br>15.2 | 21.8<br>19.8 |
| 1150 nm | Before heat treatment<br>After heat treatment | 82.2<br>81.5 | 81.4<br>80.3 |
| Absorbance change ratio (%) ($\lambda$=700 nm) | | 5 | 6 |
| Fining performance<br>Devitrification resistance | | A<br>○ | B<br>○ |

First, raw glass materials were blended so as to obtain the compositions shown in Tables 1 to 4. The blended raw glass materials were loaded into a platinum crucible and melted under the following melting conditions 1 to 3.

Melting condition 1: Melting at 1600°C for 24 hours Melting condition 2: Melting at 1600°C for 20 hours, followed by melting at 1700°C for 4 hours

Melting condition 3: Melting at 1500°C for 20 hours, followed by melting at 1600°C for 4 hours

Two spacers each with a thickness of 5 mm were placed on a carbon sheet, and molten glass was poured between the spacers and formed into a sheet shape having a uniform thickness with a roller. The resultant sheet shaped sample was loaded into an electric furnace kept at 700°C and held for 30 minutes. After that, the sample was cooled (annealed) to room temperature in the furnace over 10 hours or more.

Then, the cooled sample was heated in the electric furnace to obtain crystallized glass. The heating profile thereof was set as follows: nucleus formation step was performed at 770°C for 3 hours, and crystal growth step was performed at 880°C for 1 hour.

The resultant crystallized glass was evaluated for its transmittance in visible and infrared regions, fining performance, and devitrification resistance.

Each crystallized glass was processed into a sample having a thickness of 3 mm with both mirror polished surfaces, and the transmittance thereof was measured at 700 nm and 1150 nm, using a spectrophotometer (produced by Jasco Corporation, V-760). The measurement conditions were as follows: a measurement range of 1500 to 380 nm and a scan speed of 200 nm/min. Further, the samples subjected to heat treatment (acceleration test) at 900°C for 50 hours were also measured for transmittance in the same manner.

In addition, an absorbance was calculated from the transmittance of each sample in accordance with the calculation equation described in the foregoing, and an absorbance variation at a wavelength of 700 nm was determined for each of the crystallized glasses obtained under the melting conditions 1 to 3. Further, a change ratio between the absorbances at a wavelength of 700 nm before and after the acceleration test was determined for the crystallized glass obtained under the melting condition 1. It should be noted that the absorbance variation was determined in accordance with the following calculation equation.

$$\texttt{Absorbance}$$

$$\texttt{variation=(absorbance}_{max}\texttt{-absorbance}_{min}\texttt{)/absorbance}_{min}\texttt{×100(\%)}$$

(Here, the maximum and minimum of the absorbances at a wavelength of 700 nm measured for the crystallized glasses obtained under the melting conditions 1 to 3 were referred to as "absorbance$_{max}$" and "absorbance$_{min}$, respectively.)

An evaluation for fining performance was performed as described below. The number of bubbles per 100 g of a sample was calculated, and the sample was evaluated as "A" when the number of bubbles per 100 g of the sample was 0, as "B" when the number of bubbles was more than 0 and less than 2, as "C" when the number of bubbles was 2 to less than 5, as "D" when the number of bubbles was 5 to less than 10, or as "E" when the number of bubbles was 10 or more. It should be noted that a smaller bubble number means that the number of bubbles remaining in the glass is smaller and hence the glass is more excellent in fining performance.

The devitrification resistance was evaluated by placing each sample on a platinum foil in an electric furnace set to 1350°C and keeping the sample for 24 hours, and determining whether or not devitrification occurred. When the devitrification was not observed, the evaluation was made as "○", and when the devitrification was observed, the evaluation was made as "×".

As is apparent from Tables 1 to 4, each of the crystallized glasses Nos. 1 to 11, 16, and 17 as examples shows a small change in transmittance (absorbance) property for visible light even when a melting condition is changed and hence can sufficiently shield light in the visible region, and also has a high infrared light transmittance. It is also understood from the tables that each of the crystallized glasses Nos. 1 to 11, 16, and 17 shows a small change in transmittance in the visible region even in the acceleration test estimating long-term use.

On the other hand, the crystallized glass No. 12 as a comparative example was poor in devitrification resistance. In addition, each of the crystallized glasses Nos. 13 and 15 showed a large change in transmitting property for visible light due to a difference in melting condition, and a large change between transmittance properties for visible light before and after the acceleration test. The transmittance at 700 nm of the crystallized glass No. 14 was 83.5%, which was an extremely large value, because the content of $V_2O_5$ as a coloring agent was too small.

Industrial Applicability

The crystallized glass of the present invention is suitable as a top plate of a cooking device using, for example, IH, a halogen heater, a heating wire, or gas.

**Claims**

1. A crystallized glass, comprising, as a glass composition in terms of mass%, 55 to 73% of $SiO_2$, 17 to 25% of $Al_2O_3$, 2 to 5% of $Li_2O$, 2.5 to 5.5% of $TiO_2$, 0 to 2.3% of $ZrO_2$, 0.2 to 0.9% of $SnO_2$, and 0.005 to 0.09% of $V_2O_5$, wherein the crystallized is substantially free of $As_2O_3$ and $Sb_2O_3$.

2. The crystallized glass according to claim 1, wherein the total content of $TiO_2+SnO_2$ is 2.7 to 6%.

3. The crystallized glass according to claim 1 or 2, further comprising 0 to 2% of MgO and 0 to 2% of ZnO.

4. The crystallized glass according to claim 3, wherein the total content of $Li_2O+MgO+ZnO$ is 3 to 6%.

5. The crystallized glass according to any one of claims 1 to 4, wherein the crystallized glass is used for a top plate of a cooking device.

6. A crystallizable glass, comprising, as a glass composition in terms of mass%, 55 to 73% of $SiO_2$, 17 to 25% of $Al_2O_3$, 2 to 5% of $Li_2O$, 2.5 to 5.5% of $TiO_2$, 0 to 2.3% of $ZrO_2$, 0.2 to 0.85% of $SnO_2$, and 0.005 to 0.09% of $V_2O_5$, wherein the crystallizable glass is substantially free of $As_2O_3$ and $Sb_2O_3$.

# EP 2 660 214 A1

<table>
<tr><td colspan="2" align="center"><strong>INTERNATIONAL SEARCH REPORT</strong></td><td>International application No.<br>PCT/JP2011/079993</td></tr>
</table>

**A. CLASSIFICATION OF SUBJECT MATTER**
*C03C10/12*(2006.01)i

According to International Patent Classification (IPC) or to both national classification and IPC

**B. FIELDS SEARCHED**

Minimum documentation searched (classification system followed by classification symbols)
C03C1/00-14/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
INTERGLAD

**C. DOCUMENTS CONSIDERED TO BE RELEVANT**

| Category* | Citation of document, with indication, where appropriate, of the relevant passages | Relevant to claim No. |
|---|---|---|
| X | JP 11-100230 A  (Nippon Electric Glass Co., Ltd.),<br>13 April 1999 (13.04.1999),<br>claims; paragraph [0001]; examples 1, 4<br>(Family: none) | 1-6 |
| X | JP 2010-202510 A  (SCHOTT AG.),<br>16 September 2010 (16.09.2010),<br>claims; glass no.1<br>& US 2010/0224619 A1    & EP 2226303 A2 | 1-6 |
| X | JP 2009-527436 A  (Eurokera),<br>30 July 2009 (30.07.2009),<br>claims; paragraph [0001]; concrete examples B, D to I<br>& US 2007/0129231 A1    & EP 1957421 A<br>& WO 2007/065910 A1 | 1-6 |

[X] Further documents are listed in the continuation of Box C.          [ ] See patent family annex.

| | |
|---|---|
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |
| Date of the actual completion of the international search<br>    22 March, 2012 (22.03.12) | Date of mailing of the international search report<br>    03 April, 2012 (03.04.12) |
| Name and mailing address of the ISA/<br>    Japanese Patent Office | Authorized officer |
| Facsimile No. | Telephone No. |

Form PCT/ISA/210 (second sheet) (July 2009)

12

**INTERNATIONAL SEARCH REPORT**

| International application No. |
|---|
| PCT/JP2011/079993 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2005-325018 A  (SCHOTT AG.),<br>24 November 2005 (24.11.2005),<br>claims; paragraphs [0001], [0034]; glass no.3<br>to 5<br>& US 2005/0252503 A1 | 1-6 |

Form PCT/ISA/210 (continuation of second sheet) (July 2009)

EP 2 660 214 A1

**INTERNATIONAL SEARCH REPORT**

| International application No. |
| --- |
| PCT/JP2011/079993 |

---

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III    Observations where unity of invention is lacking (Continuation of item 3 of first sheet)**

This International Searching Authority found multiple inventions in this international application, as follows:

```
   The invention of claim 1 does not have novelty and a special technical feature
since the invention is disclosed in the following documents 1-3, and
consequently, the invention of claim 1 does not comply with the requirement
of unity.
   The inventions of claims indicated below are relevant to a main invention
group.
   Claims 1-5
   Document 1: JP 11-100230 A
   Document 2: JP 2010-202510 A
   Document 3: JP 2009-527436 A
```

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3009056 B
- JP 2003068435 A
- JP 2004523446 A